# EUROPEAN PATENT APPLICATION

(11) **EP 3 269 759 A1**
(43) Date of publication of application: **17.01.2018**
(21) Application number: 16761809.9
(22) Date of filing: 10.03.2016
(51) Int. Cl.: C08J 3/20, B60C 1/00, C08K 3/36, C08K 5/405, C08K 5/54, C08L 9/06

(54) **METHOD FOR PRODUCING RUBBER COMPOSITION FOR TIRES**

(30) Priority: 11.03.2015 JP 2015048791
(71) Applicant: Bridgestone Corporation, Tokyo 104-8340 (JP)
(72) Inventor: TSUJI Takanori, Tokyo 104-8340 (JP)
(74) Representative: Lang, Johannes
(86) International application number: PCT/JP2016/057507
(87) International publication number: WO 2016/143843

(57) **Abstract**

In order to allow a braking property on wet roads and a wear resistance to be compatible, provided is a method for producing a rubber composition passing through a stage including a kneading step in which kneaded are 100 parts by mass of a rubber component (A) containing 60% by mass or more of a styrene-butadiene copolymer rubber, 30 to 80 parts by mass of silica (B), 5 to 14 parts by mass of a silane coupling agent (C), 3 to 14 parts by mass of a thermoplastic resin (D), and thiourea compound (E), and including subsequently a kneading step in which a vulcanizing agent (F) is further added and kneaded.

## Description

### Technical Field

The present invention relates to a method for producing a rubber composition for a tire which is excellent in a wet performance and a wear resistance.

### Background Art

In providing tires with a high quality, it is required in the market to enhance a wear resistance in order to extend a life of the tires and improve a wet performance which is gripping property on wet roads in order to secure safety, however, it is a difficult problem to allow the wet performance and the wear resistance to be compatible.

As disclosed in, for example, patent document 1, it is generally recognized that while it is relatively easy to improve a wet performance by blending silica and a thermoplastic resin, it is difficult to maintain a wear resistance. Silica has so far been a filler which is generally used in addition to carbon blacks, and the performances thereof are varied depending on how to disperse and fit silica evenly into the rubber components in blending silica. From the above viewpoints, approaches from many aspects have been made. On the other hand, the thermoplastic resins are considered to be determined in a range of contribution according to the kind and the blend amount of the resins.

### Related Art Document

### Patent document

Patent document 1: PCT International Publication No. WO 2013/099822

### Disclosure of the Invention

### Problem to be solved by the invention

An object of the present invention is to provide a method for producing a rubber composition for a tire which makes it possible to allow a wear resistance and a wet performance to be compatible.

In order to solve the problems described above, the inventors have found a method for producing a rubber composition for a tire which makes it possible to maintain or improve a wear resistance by using thiourea to enhance the effect of a silane coupling agent and enhance dispersibility of silica in a rubber composition in which a thermoplastic resin is blended in order to enhance a wet performance and in which particularly a styrene-butadiene copolymer is used as a principal rubber component, and thus the present invention have been come to complete.

That is, the present invention resides in the following items (1) to (3).
(1) A method for producing a rubber composition comprising:
   100 parts by mass of a rubber component (A) containing 60% by mass or more of a styrene-butadiene copolymer rubber;
   30 to 80 parts by mass of silica (B);
   5 to 14 parts by mass of a silane coupling agent (C);
   3 to 14 parts by mass of a thermoplastic resin (D);
   at least one thiourea compound (E) selected from thiourea and diethylthiourea; and
   a vulcanizing agent (F),
   wherein the producing method includes a kneading step for kneading the rubber composition in plural stages, and
   the kneading step includes:
   a first kneading stage for kneading 100 parts by mass of
      the rubber component (A);
      the silica (B);
      2 parts by mass or more of the silane coupling agent (C);
      3 parts by mass or more of the thermoplastic resin (D); and
      a part or all of the thiourea compound (E), and
   a second kneading stage for kneading the kneaded matter prepared by kneading in the first kneading stage, and the vulcanizing agent (F) after finishing the first kneading stage.
(2) The method for producing a rubber composition as described in the above item (1), wherein a part or all of the ends of the rubber component (A) containing 60% by mass or more of the styrene-butadiene copolymer rubber are modified.
(3) The method for producing a rubber composition as described in the above item (1) or (2), wherein the rubber component (A) containing 60% by mass or more of the styrene-butadiene copolymer rubber contains two kinds of the styrene-butadiene copolymer rubbers having different glass transition temperatures Tg and satisfies parts by mass of the styrene-butadiene copolymer rubber of low Tg/parts by mass of the styrene-butadiene copolymer rubber of high Tg≥1.
(4) The method for producing a rubber composition as described in any one of the above items (1) to (3), wherein the styrene-butadiene copolymer rubber of low Tg out of two kinds of the styrene-butadiene copolymer rubbers contained in the rubber component (A) containing 60% by mass or more of the styrene-butadiene copolymer rubber is modified.

### Effect of the invention

According to the above item (1), a blend rate of the rubber composition which is excellent in a wet performance and a wear resistance, and the method for producing the same are shown.

According to the above items (2) to (4), particularly the conditions of the rubber component (A) are shown, and the method for producing the rubber composition which is excellent in a wear resistance is shown.

### MODE FOR CARRYING OUT THE INVENTION

The method for producing a rubber composition according to the present invention is a method for producing a rubber composition comprising the respective components of (A) to (D) described above, and at least one thiourea compound (E) selected from thiourea and diethylthiourea, the vulcanizing agent (F), and the dispersion of the silica (B) is enhanced by the thiourea compound (E) in kneading in a stage before blending the vulcanizing agent (F). In the method for producing a rubber composition according to the present invention, particularly the thermoplastic resin (D) is blended in order to enhance a wet performance which is required to a rubber composition for a tire, and the wear resistance which is difficult to improve can be supplemented by enhancement of the dispersion of the silica (B) as described above.

Thiourea is a compound obtained by substituting oxygen of a carbonyl group of urea with sulfur. Similarly, the thiourea compound is a compound group including compounds obtained by substituting hydrogen on nitrogen of thiourea with an organic group. The thiourea compound (E) used in the method for producing a rubber composition according to the present invention includes non-substituted thiourea and diethylthiourea having ethyl groups on nitrogen. As described above, the dispersion of the silica (B) is expedited by using the thiourea compound (E) in a specific stage during kneading. Thiourea which is non-substituted on nitrogen is fundamentally highly reactive but has a high melting point of 182°C, and therefore it is considered that it had better be kneaded at higher temperature.

The thiourea compound (E) is used preferably in the initial stage of the kneading step in order to exert the effect. That is, the silica (B) is not dispersed evenly except in an early stage of kneading. Accordingly, time passing until adding the thiourea compound (E) since blending at least three components of the rubber component (A), the silica (B) and the silane coupling agent (C) and starting kneading them is preferably 0 to 180 seconds. An upper limit value thereof is preferably 150 seconds or shorter, more preferably 120 seconds or shorter. If the thiourea compound (E) is blended after exceeding 180 seconds, the effect is not obtained.

As described above, when the thiourea compound (E) is blended and kneaded, the vulcanizing agent (F) is not fundamentally blended in the above stage, and the stage is called as a first kneading stage. Time required for the first kneading is 10 seconds to 20 minutes, preferably 10 seconds to 10 minutes and particularly preferably 30 seconds to 5 minutes. The kneading temperature is 120 to 190°C at the highest, preferably 130 to 175°C and particularly preferably 140 to 170°C. The reaction can sufficiently be expedited by elevating the temperature until exceeding at least 120°C in heating since starting kneading, and on the other hand, unnecessary secondary reactions have to be prevented by controlling the temperature to 190°C or lower.

In the method for producing a rubber composition according to the present invention, kneading is carried out at higher temperature than usual in the first kneading stage carried out by blending the thiourea compound (E) while paying attentions to that the effect of the thiourea compound (E) can sufficiently be exerted by kneading at high temperature.

As described above, at least the components (A) to (C) and (E) are blended in the first kneading stage, and the thermoplastic resin (D) can be blended as well at the same time, or a middle stage may suitably be provided in the first kneading stage. That is, the stage in which all the components (A) to (E) are blended may be finished until the beginning of the second kneading stage. In any cases, the thiourea compound (E) is blended in an amount of preferably 0.5 to 3 parts by mass based on 100 parts by mass of the rubber component.

The thiourea compound (E) used in the first kneading stage is blended in an amount falling in a range of 2 to 100% by mass, preferably 4 to 80% by mass and particularly preferably 4 to 50% by mass based on the silane coupling agent (C). The blend effect is exerted by blending the thiourea compound (E) in an amount of 2% by mass or more, and the rubber composition can be produced without influencing the vulcanizing time in the subsequent second kneading stage if the blend amount is 100% by mass or less.

The rubber component (A) containing 60% by mass or more of the styrene-butadiene copolymer rubber is used in the method for producing a rubber composition according to the present invention. Hereinafter, the styrene-butadiene copolymer shall be abbreviated as SBR. Emulsion-polymerized SBR and solution-polymerized SBR are used as the styrene-butadiene copolymer. The rubber component (A) contains 60% by mass or more of SBR, and it is a matter of course that the rubber component (A) may contain up to 100% by mass of SBR as an upper limit value. SBR can be used in an amount of preferably 80 to 100% by mass, particularly preferably 90 to 100% by mass. The wet performance is improved by using 60% by mass or more of SBR, and in addition thereto, the effect of increasing dispersibility of the silica (B) by the thiourea compound (E) is exerted in the producing method of the present invention.

The rubber component (A) is preferably modified in a part or all of ends thereof. That is, end-modified SBR is obtained by reaction of a modifier with the active ends of a copolymer obtained from the copolymerization of 1,3-butadiene and styrene by living anion polymerization in a solution using an initiator such as organolithium and lithiumamide.

At least one compound selected from a hydrocarbyloxysilane compound represented by the following Formula (I) and a partially condensed product thereof can be given as the modifier. 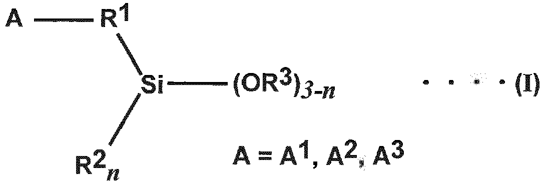 wherein when A = A¹, A¹ is a monovalent group having at least one functional group selected from epoxy, thioepoxy, isocyanate, thioisocyanate, ketone, thioketone, aldehyde, thioaldehyde, imine, amide, trihydrocarbyl isocyanurate ester, carboxylate ester, thiocarboxylate ester, metal salt of carboxylic acid, metal salt of thiocarboxylic acid, carboxylic anhydride, carboxylic halide, and dihydrocarbyl carbonate ester; R¹ is a single bond or a divalent inactive hydrocarbon group; R² and R³ each represent independently a monovalent aliphatic hydrocarbon group having 1 to 20 carbon atoms or a monovalent aromatic hydrocarbon group having 6 to 18 carbon atoms; n is an integer of 0 to 2; when plural R² are present, plural R² may be the same or different; when plural OR³ are present, plural OR³ may be the same or different; and active protons and onium salts are not contained in the molecule.

In Formula (I), the imine out of the functional groups in A¹ includes ketimine, aldimine and amidine, and the carboxylate esters include unsaturated carboxylate esters such as acrylate and methacrylate. Also, the metals of the metal salts of carboxylic acid and thiocarboxylic acid include metals such as alkali metals, alkaline earth metals, Al, Sn, and Zn.

An alkanediyl group having 1 to 20 carbon atoms can be preferably given as the divalent inert hydrocarbon group of R¹. The above alkanediyl group may be any of linear, branched and cyclic groups, and alkanediyl group is particularly suitably the linear groups. The examples of the above linear alkanediyl group include methanediyl, ethanediyl, propanediyl, butanediyl, pentanediyl, hexanediyl, octanediyl, decanediyl, dodecanediyl, and the like.

R² and R³ include groups such as an alkyl group having 1 to 20 carbon atoms, an alkenyl group having 2 to 18 carbon atoms, an aryl group having 6 to 18 carbon atoms, and an arylalkyl group having 7 to 18 carbon atoms. The alkyl group and the alkenyl group may be any of linear, branched and cyclic groups, and the alkyl group and the alkenyl group include groups such as, for example, methyl, ethyl, 1-propyl, 2-propyl, 1-butyl, 2-butyl, 2-methyl-1-propyl, 2-methyl-2-propyl, pentyl, hexyl, octyl, decyl, dodecyl, cyclopentyl, cyclohexyl, vinyl, propenyl, allyl, hexenyl, octenyl, cyclopentenyl, and cyclohexenyl. Also, the aryl group may have a substituent such as a simple alkyl group on an aromatic ring, and the examples thereof include phenyl, tolyl, xylyl, naphthyl, and the like. Further, the arylalkyl group may have a substituent of an aromatic ring on a simple alkyl group and includes, for example, benzyl, phenethyl, naphthylmethyl, and the like.

The term n is an integer of 0 to 2 and is preferably 0. Active protons and onium salts are not present in the above molecule.

Capable of being given as the hydrocarbyloxysilane compound represented by Formula (I) are, for example, epoxy-or thioepoxy-containing hydrocarboxysilane compounds such as 2-glysidoxyethyltrimethoxysilane, 2-glysidoxyethyltriethoxysilane, (2-glysidoxyethyl)methyldimethoxysilane, 3-glysidoxypropyltrimethoxysilane, 3-glysidoxypropyltriethoxysilane, (3-glysidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, and compounds obtained by substituting the epoxy groups in the above compounds with a thioepoxy group. Among epoxy- or thioepoxy-containing hydrocarboxysilane compounds, 3-glysidoxypropyltrimethoxysilane and 2-(3,4-epoxycyclohexyl)ethyltrimethoxysilane are particularly suitable.

Capable of being preferably given as the imine-containing hydrocarbyloxysilane compound are compounds such as N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl compounds, methyldiethoxysilyl compounds, ethyldiethoxysilyl compounds, methyldimethoxysilyl compounds, ethyldimethoxysilyl compounds which correspond to the above triethoxysilyl compounds, and the like. Among the imine-containing hydrocarbyloxysilane compounds, N-(1-methylpropylidene)-3-(triethoxysilyl)-1-propaneamine and N-(1,3-dimethylbutylidene)-3-(triethoxysilyl)-1-propaneamine are particularly suited.

Further, the following compounds can be given as the other hydrocarbyloxysilane compounds. That is, capable of being given as the imine- or amidine-containing hydrocarbyloxysilane compound are 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline, and the like. Among imine- or amidine-containing hydrocarbyloxysilane compounds, 3-(1-hexamethyleneimino)propyl(triethoxy) silane, (1-hexamethyleneimino) methyl(trimethoxy)silane, 1-[3-(triethoxysilyl)propyl]-4,5-dihydroimidazole, and 1-[3-(trimethoxysilyl)propyl]-4,5-dihydroimidazole can preferably be given. Further, the imine- or amidine-containing hydrocarbyloxysilane compound includes compounds such as N-(3-triethoxysilylpropyl)-4,5-dihydroimidazole, N-(3-isopropoxysilylpropyl)-4,5-dihydroimidazole, and N-(3-methyldiethoxysilylpropyl)-4,5-dihydroimidazole. Among imine- or amidine-containing hydrocarbyloxysilane compounds, N-(3-triethoxysilylpropyl)-4,5-dihydroimidazole is preferred.

The carboxylate ester-containing compound includes compounds such as 3-methacryloyloxypropyltriethoxysilane, 3-methacryloyloxypropyltrimethoxysilane, 3-methacryloyloxypropylmethyldiethoxysilane, and 3-methacryloyloxypropyltriisopropoxysilane. Among carboxylate ester-containing compounds, 3-methacryloyloxypropyltrimethoxysilane is preferred.

Further, the isocyanate-containing compound includes compounds such as 3-isocyanatepropyltrimethoxysilane, 3-isocyanatepropyltriethoxysilane, 3-isocyanatepropylmethyldiethoxysilane, and 3-isocyanatepropyltriisopropoxysilane. Among isocyanate-containing compounds, 3-isocyanatepropyltriethoxysilane is preferred.

Also, the carboxylic anhydride containing compound includes compounds such as 3-triethoxysilylpropylsuccinic anhydride, 3-trimethoxysilylpropylsuccinic anhydride, and 3-methyldiethoxysilylpropylsuccinic anhydride. Among carboxylic anhydride containing compounds, 3-triethoxysilylpropylsuccinic anhydride is preferred.

At least one or more of the hydrocarbyloxysilane compound in which A is A² in Formula (I) and in which A² is cyclic tertiary amine, non-cyclic tertiary amine, pyridine, sulfide and polysulfide, and/or the partially condensed product thereof can be used in combination with the modifiers described above. The above modifier of a combined use type is not substantially reacted directly with the polymerizable active ends and remains in the reaction system in the form of the unreacted substance, and therefore the modifier is consumed for condensation with the residue of the hydrocarbyloxysilane compound introduced into the active ends.

The hydrocarbyloxysilane compound in which A is A² in Formula (I) includes, for example, the non-cyclic tertiary amine-containing hydrocarbyloxysilane compounds such as 3-dimethylaminopropyl (triethoxy)silane, 3-dimethylaminopropyl(trimethoxy)silane, 3-diethylaminopropyl(triethoxy)silane, 3-diethylaminopropyl(trimethoxy) silane, 2-dimethylaminoethyl(triethoxy)silane, 2-dimethylaminoethyl (trimethoxy)silane, 3-dimethylaminopropyl(diethoxy)methylsilane, and 3-dibutylaminopropyl(triethoxy)silane. Among non-cyclic tertiary amine-containing hydrocarbyloxysilane compounds, 3-diethylaminopropyl(triethoxy)silane and 3-dimethylaminopropyl(triethoxy)silane are preferred.

Also, capable of being given as the cyclic tertiary amine-containing hydrocarbyloxysilane compound are 3-(1-hexamethyleneimino)propyl(triethoxy) silane, 3-(1-hexamethyleneimino)propyl(trimethoxy) silane, (1-hexamethyleneimino) methyl(trimethoxy)silane, (1-hexamethyleneimino) methyl(triethoxy)silane, 2-(1-hexamethyleneimino) ethyl(triethoxy)silane, 2-(1-hexamethyleneimino)ethyl(trimethoxy) silane, 3-(1-pyrrodinyl)propyl(triethoxy) silane, 3-(1-pyrrodinyl)propyl(trimethoxy)silane, 3-(1-heptamethyleneimino)propyl (triethoxy)silane, 3-(1-dodecamethyleneimino)propyl (triethoxy)silane, 3-(1-hexamethyleneimino)propyl(diethoxy)methylsilane, and 3-(1-hexamethyleneimino)propyl(diethoxy)ethylsilane. Among cyclic tertiary amine-containing hydrocarbyloxysilane compounds, 3-(1-hexamethyleneimino)propyl(triethoxy)silane is suited.

Further, compounds such as 2-(trimethoxysilylethyl)pyridine, 2-(triethoxysilylethyl)pyridine, and 4-ethylpyridine can be given as the other hydrocarbyloxysilane compounds.

Also, capable of being used are the hydrocarbyloxysilane compound in which A is A³ in Formula (I) and in which A³ is represented by a monovalent group having at least one functional group selected from alcohols, thiols, primary amines and onium salts thereof, cyclic secondary amines and onium salts thereof, non-cyclic secondary amines and onium salts thereof, onium salts of cyclic tertiary amines, onium salts of non-cyclic tertiary amines, groups having aryl or arylalkyl Sn bonds, sulfonyl, sulfinyl and nitrile, and/or partially condensed compounds thereof.

The primary amine which is A³ includes aromatic amines such as aniline, and the non-cyclic secondary amines include N-(monosubstituted) substituted aromatic amine such as N-(monosubstituted) aniline. Further, the onium salts of the non-cyclic tertiary amines include the onium salts of N,N-(disubstituted) aromatic amines such as N,N-(disubstituted) aniline. Also, in the cases of the cyclic secondary amines and the cyclic tertiary amines, ether and/or thioether can be included as a part of the ring.

Capable of being given as the hydrocarbyloxysilane compound in which A is A³ are, for example, compounds such as 3-aminopropyltrimethoxysilane, 3-aminopropyltriethoxysilane, hydroxymethyltrimethoxysilane, hydroxymethyltriethoxysilane, mercaptomethyltrimethoxysilane, mercaptomethyltriethoxysilane, aminophenyltrimethoxysilane, aminophenyltriethoxysilane, 3-(N-methylamino)propyltrimethoxysilane, 3-(N-methylamino)propyltriethoxysilane, octadecyldimethyl(3-trimethylsilylpropyl)ammonium chloride, octadecyldimethyl(3-triethylsilylpropyl)ammonium chloride, cyanomethyltrimethoxysilane, cyanomethyltriethoxysilane, sulfonylmethyltrimethoxysilane, sulfonylmethyltriethoxysilane, sulfinylmethyltrimethoxysilane, and sulfinylmethyltriethoxysilane.

The styrene-butadiene copolymer rubber used in an amount of 60% by mass or more in the rubber component (A) is used preferably in the mixture of the copolymer rubber of low Tg in which a glass transition temperature Tg is relatively low and the copolymer rubber of high Tg in which a glass transition temperature Tg is relatively high. The SBR of low Tg contributes to an improvement in the wet performance, and the SBR of high Tg contributes to an improvement in the wear resistance. Also, the copolymer rubber can be expected on the whole to make it easier to meet a change in the temperature in any way. In the term of the relatively high or low temperature, to be specific, Tg of about -30°C shall be called low Tg, and Tg of about -10°C shall be called high Tg in the present invention. In any cases, used are the copolymer rubbers having glass transition temperatures which are apart to such an extent that glass transition temperatures are not overlapped in a temperature region. In a blend ratio thereof, the SBR of low Tg is blended preferably in a higher blend ratio than the SBR of high Tg. That is, a mass part number of the SBR of low Tg/a mass part number of the SBR of high Tg≥1 is preferably satisfied, and a mass part number of the SBR of low Tg/a mass part number of the SBR of high Tg≥1.5 is particularly preferably satisfied. However, blending more SBR of low Tg does not mean that emphasis is put on the contribution of the SBR of low Tg.

Further, from the viewpoint of end modification, the SBR of low Tg described above is modified preferably at ends. That is, it is a target which is desired to enhance the reaction with the silica (C). The SBR of low Tg which is modified at ends is increased in an affinity with the silica by a modified group introduced passing through primary modification and secondary modification, and therefore the silica is improved in dispersibility by the modified groups introduced into the ends and results in improving the wet performance and the wear resistance.

In addition to the above, natural rubber, polybutadiene rubber, polyisoprene rubber, butyl rubber, acrylonitrile-butadiene rubber, ethylene-propylene-diene rubber and the like which are usually used for producing rubber compositions can suitably be blended for the rubber component (A) in a range of up to 40% based on the rubber composition and used for the method for producing a rubber composition according to the present invention.

Commercially available silica can suitably be used as the silica (B) used in the method for producing a rubber composition according to the present invention, and among the silica, wet silica, dry silica and colloidal silica are preferably used. Wet silica is particularly preferably used. Trade names Nipsil AQ, Nipsil KQ, manufactured by Tosoh Silica Corporation, and a trade name Ultrasil VN3, manufactured by Degussa AG can be used as the commercially available silicas.

The silane coupling agent (C) used in the method for producing a rubber composition according to the present invention is preferably at least one compound selected from the group consisting of compounds represented by the following Formulas (II) to (V), and a blend effect exerted by thiourea is enhanced in any of the silane coupling agents (C).

The compounds represented by Formulas (II) to (V) shall be explained below in order.

**(R⁴O)_{3-*p*}R⁵*ₚ*Si-R⁶-S*ₐ*,-R⁶-Si(OR⁴)_{*3*-*r*}R⁵*ᵣ*** .... **(II)**

wherein hen plural R⁴ are present, plural R⁴ may be the same or different, and the respective groups are substituents selected from a linear, cyclic or branched alkyl group having 1 to 8 carbon atoms, a linear or branched alkoxyalkyl group having 2 to 8 carbon atoms and a silanol group; when plural R⁵ are present, plural R⁵ may be the same or different, and the respective groups are linear, cyclic or branched alkyl groups having 1 to 8 carbon atoms; when plural R⁶ are present, plural R⁶ may be the same or different, and the respective groups are linear or branched alkanediyl groups having 1 to 8 carbon atoms; both of p and r are not 3 and may be the same or different, and p and r each are 0 to 3 in terms of an average value; and a sulfur number of a for the sulfide chain is 2 to 6 in terms of an average value.

The specific examples of the silane coupling agents (C) represented by Formulas (II) described above include compounds such as bis(3-triethoxysilylpropyl) tetrasulfide, bis(3-trimethoxysilylpropyl) tetrasulfide, bis(3-methyldimethoxysilylpropyl) tetrasulfide, bis(2-triethoxysilylethyl) tetrasulfide, bis(3-triethoxysilylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxysilylethyl) trisulfide, bis(3-monoethoxydimethylsilylpropyl) tetrasulfide, bis(3-monoethoxydimethylsilylpropyl) trisulfide, bis(3-monoethoxydimethylsilylpropyl) disulfide, bis(3-monomethoxydimethylsilylpropyl) tetrasulfide, bis(3-monomethoxydimethylsilylpropyl) trisulfide, bis(3-monomethoxydimethylsilylpropyl) disulfide, bis(2-monoethoxydimethylsilylethyl) tetrasulfide, bis(2-monoethoxydimethylsilylethyl) trisulfide, and bis(2-monoethoxydimethylsilylethyl) disulfide. 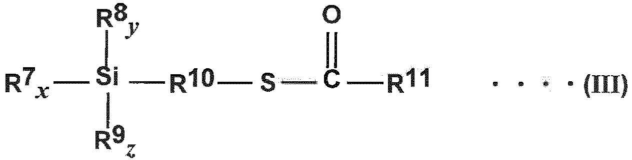 wherein R⁷ is a monovalent group selected from -Cl, -Br, R¹²O-alkoxy, R¹²C(=O)O- carboxyl, R¹²R¹³C=NO- oximato, R¹²R¹³CNO-, NR¹²R¹³- amino, and a polysiloxy group having a polysiloxy chain length of 2 to 5 (OSiR¹²R¹³)ₕ(OSiR¹²R¹³R¹⁴) which are substituted respectively with a monovalent hydrocarbon group having 1 to 18 carbon atoms. In the above explanations, R¹², R¹³ and R¹⁴ each are a hydrogen atom or a monovalent hydrocarbon group having 1 to 18 carbon atoms, and h is 1 to 4 in terms of an average value. R⁸ is R⁹, a hydrogen atom or a monovalent hydrocarbon group having 1 to 18 carbon atoms, and R⁹ is R⁷, R⁸, a hydrogen atom or a - [O (R¹⁵O)ⱼ]_{1/2}- group. R¹⁵ is an alkanediyl group having 1 to 18 carbon atoms, and j is an integer of 1 to 4. R¹⁰ is a divalent hydrocarbon group having 1 to 18 carbon atoms, and R¹¹ is a monovalent hydrocarbon group having 1 to 18 carbon atoms. The terms x, y and z are numbers satisfying the relation of x + y + 2z = 3, 0≤x≤3, 0≤y≤2, 0≤z≤1.

In Formula (III) described above, R¹¹, R¹², R¹³ and R¹⁴ may be the same or different and each are preferably a group selected from the group consisting of a linear, cyclic or branched alkyl group having 1 to 18 carbon atoms, an alkenyl group, an aryl group and an arylalkyl group. Also, when R⁸ is a monovalent hydrocarbon group having 1 to 18 carbon atoms, R⁸ is preferably a group selected from the group consisting of a linear, cyclic or branched alkyl group, an alkenyl group, an aryl group and an arylalkyl group. R¹⁵ is preferably a linear, cyclic or branched alkanediyl group having 1 to 8 carbon atoms, and R¹⁵ is particularly preferably the linear alkanediyl group. Capable of being given as R¹⁰ are, for example, an alkanediyl group having 1 to 18 carbon atoms which may be any of a linear, cyclic or branched group, an alkenediyl group having 2 to 18 carbon atoms, a cycloalkanediyl group having 5 to 18 carbon atoms which may have a substituent such as a lower alkyl group on a ring, a cycloalkylalkanediyl group having 6 to 18 carbon atoms, an arenediyl group having 6 to 18 carbon atoms, and an arylalkanediyl group having 7 to 18 carbon atoms. R⁷ is preferably an alkanediyl group having 1 to 6 carbon atoms, and a linear alkanediyl group such as methanediyl, ethanediyl, propanediyl, butanediyl, pentanediyl, and hexanediyl can particularly preferably be given.

The specific examples of the monovalent hydrocarbon group having 1 to 18 carbon atoms represented by R⁸, R¹¹, R¹², R¹³ and R¹⁴ in Formula (III) described above include methyl, ethyl, 1-propyl, 2-propyl, 1-butyl, 2-methyl-1-propyl, 2-butyl, 2-methyl-2-propyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, naphthylmethyl, and the like.

The examples of the group represented by R¹⁵ in Formula (III) described above include methanediyl, ethanediyl, propanediyl, butanediyl, pentanediyl, hexanediyl, octanediyl, decanediyl, dodecanediyl, and the like.

The specific examples of the silane coupling agent (C) represented by Formula (III) described above include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like. Among the silane coupling agent represented by Formula (III), 3-octanoylthiopropyltriethoxysilane (trademark: NXT Silane, manufactured by Momentive Performance Materials Inc.) is particularly preferred.

**(R¹⁶O)_{*3*-*s*}R¹⁷*ₛ*Si- R¹⁸-S*ₖ*-R¹⁹-S*ₖ*- R¹⁸-Si(OR¹⁶)_{*3*-*t*}R¹⁷*ₜ*** .... **(IV)**

**wherein R¹⁹ = -S-R²⁰-S-, -R²¹-S*ₘₗ*-R²²-,**
   **-R²³-S*ₘ₂*-R²⁴-S*ₘ₃*-R²⁵-**
wherein when plural R¹⁶ are present, plural R¹⁶ may be the same or different, and the respective groups are substituents selected from a linear, cyclic or branched alkyl group having 1 to 8 carbon atoms, a linear or branched alkoxyalkyl group having 2 to 8 carbon atoms and a silanol group; when plural R¹⁷ are present, plural R¹⁷ may be the same or different, and the respective groups are linear, cyclic or branched alkyl groups having 1 to 8 carbon atoms; when plural R¹⁸ are present, plural R¹⁸ may be the same or different, and the respective groups are linear or branched alkanediyl groups having 1 to 8 carbon atoms; R¹⁹ is a divalent group selected from a group represented by Formula (-S-R²⁰-S-), a group represented by Formula (-R²¹-Sₘ₁-R²²-) and a group represented by Formula (-R²³-Sₘ₂-R²⁴-Sₘ₃R²⁵-) (R²⁰ to R²⁵ each are substituents selected from a divalent hydrocarbon group having 1 to 20 carbon atoms, a divalent aromatic group and a divalent organic group containing a hetero element other than sulfur and oxygen, and m1, m2 and m3 each are 1 or more and less than 4 in terms of an average number; plural k may be the same or different and each are 1 to 6 in terms of an average value; s and t are 0 to 3 in terms of an average value; however, both of s and t are not 3.

The specific examples of the silane coupling agent (C) represented by Formula (IV) described above include suitably compounds represented by average composition formulas of:
(C₂H₅O)₃Si(CH₂)₃S₂(CH₂)₆S₂(CH₂)₃Si(OC₂H₅)₃,
(C₂H₅O)₃Si(CH₂)₃S₂(CH₂)₁₀S₂(CH₂)₃Si(OC₂H₅)₃,
(C₂H₅O)₃Si(CH₂)₃S₃(CH₂)₆S₃(CH₂)₃Si(OC₂H₅)₃,
(C₂H₅O)₃Si(CH₂)₃S₄(CH₂)₆S₄(CH₂)₃Si(OC₂H₅)₃,
(C₂H₅O)₃Si(CH₂)₃S(CH₂)₆S₂(CH₂)₆S(CH₂)₃Si(OC₂H₅)₃,
(C₂H₅O)₃Si(CH₂)₃S(CH₂)₅S_{2.5}(CH₂)₆S(CH₂)₃Si(OC₂H₅)₃,
(C₂H₅O)₃Si(CH₂)₃S(CH₂)₆S₃(CH₂)₆S(CH₂)₃Si(OC₂H₅)₃,
(C₂H₅O)₃Si(CH₂)₃S(CH₂)₆S₄(CH₂)₆S(CH₂)₃Si(OC₂H₅)₃,
(C₂H₅O)₃Si(CH₂)₃S(CH₂)₁₀S₂(CH₂)₁₀S(CH₂)₃Si(OC₂H₅)₃,
(C₂H₅O)₃Si(CH₂)₃S₄(CH₂)₂S₄(CH₂)₆S₄(CH₂)₃Si(OC₂H₅)₃,
(C₂H,₅O)₃Si(CH₂)₃S₂(CH₂)₆S₂(CH₂)₆S₂(CH₂)₃Si(OC₂H₅)₃, and
(C₂H₅O)₃Si(CH₂)₃S(CH₂)₆S₂(CH₂)₆S₂(CH₂)₆S(CH₂)₃Si(OC₂H₅)₃.

The silane coupling agents (C) represented by Formula (IV) described above can be produced by a method described in, for example, Japanese Patent Application Laid-Open No. 2006-167919. Also, commercially available products can widely be used. 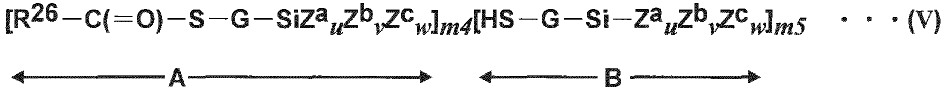 wherein R²⁶ is a linear, branched or cyclic alkyl group having 1 to 20 carbon atoms; plural G may be the same or different and each of plural G are alkanediyl groups or alkenediyl groups having 1 to 9 carbon atoms; plural Z^{a} may be the same or different, and each of plural Z^{a} are functional groups which can be bonded to two silicon atoms and are functional groups selected from groups represented by [-O-]_{1/2}, [-O-G-]_{1/2} and [-O-G-O-]_{1/2}; plural Z^{b} may be the same or different, and plural Z^{b} each of plural Z^{b} are functional groups which can be bonded to two silicon atoms and are functional groups represented by [-O-G-O-]_{1/2}; plural Z^{C} may be the same or different, and each of plural Z^{C} are functional groups selected from -Cl, -Br,-OR²⁷, R²⁷C(=O)O-, R²⁷R²⁸C=NO-, R²⁷R²⁸N-, R²⁷- and HO-G-O-; G is the same as described above; each of R²⁷ and R²⁸ are a linear, branched or cyclic alkyl group having 1 to 20 carbon atoms; m4, m5, u, v and w are 1≤m4≤20, 0≤m5≤20, 0≤u≤3, 0≤v≤2, 0≤w≤1, and (u/2) + v + 2w = 2 or 3; when the A part is plural, Z^{a}ᵤ, Z^{b}ᵥ and Z^{c}_{w} in the plural A parts each may be the same or different, and when the B part is plural, Z^{a}ᵤ, Z^{b}ᵥ and Z^{c}_{w} in the plural B parts each may be the same or different.

The specific examples of the silane coupling agent (C) represented by Formula (V) described above include compounds represented by Chemical Formula (VI), Chemical Formula (VII) and Chemical Formula (VIII).

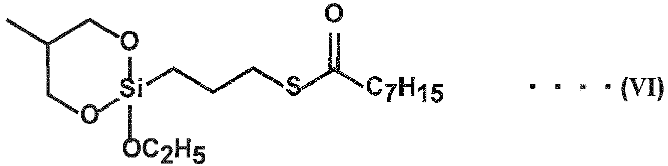

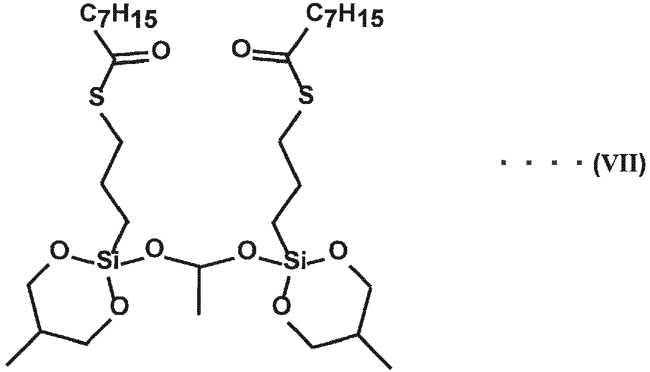

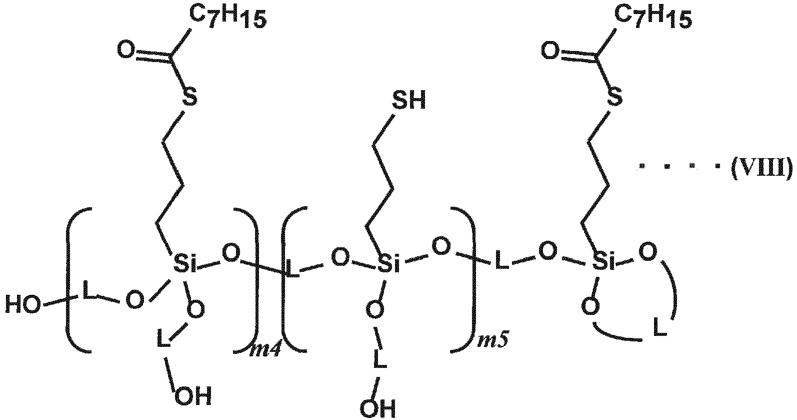

In the formulas, L each is independently an alkanediyl group or an alkenediyl group having 1 to 9 carbon atoms.

A product of a trademark: NXT Low-V Silane, manufactured by Momentive Performance Materials Inc. is available as a commercial product for the silane coupling agent represented by Chemical Formula (VI).

Also, a product of a trademark: NXT Ultra Low-V Silane, manufactured by Momentive Performance Materials Inc. is available as a commercial product for the silane coupling agent represented by Chemical Formula (VII).

Further, a product of a trademark: NXT-Z, manufactured by Momentive Performance Materials Inc. is available as a commercial product for the silane coupling agent represented by Chemical Formula (VIII).

The silane coupling agents represented by Chemical Formula (III), Chemical Formula (V), Chemical Formula (VI) and Chemical Formula (VII) have protected mercapto groups, and therefore initial vulcanization, that is, scorch can be prevented from being caused during processing in a step before a vulcanization step, so that the processing is improved.

Also, the silane coupling agents represented by Chemical Formulas (VI), (VII) and (VIII) have many carbon atoms in alkoxysilane, and therefore alcohols liberated by coupling are less liable to be volatilized. Accordingly, VOC which is a volatile organic compound is decreased, and it is preferred in terms of a working environment. Further, the silane coupling agent represented by Chemical Formula (VIII) is more preferred in terms of obtaining the tire performance of a low heat generating property.

In the silane coupling agent (C) according to the present invention, the compound represented by Chemical Formula (II) out of the compounds represented by Chemical Formulas (II) to (V) is particularly preferred, because the thiourea compound (E) is liable to activate a polysulfide bonding site which is reacted with the rubber component (A).

In the present invention, the silane coupling agent (C) may be used alone or in combination of two or more kinds thereof.

In any cases, the silane coupling agent (C) works on the main chain of the SBR which accounts for 60% or more based on the rubber component to enhance an affinity thereof with the silica. The objects of both components stay, though the target sites in which an affinity with the silica is enhanced are different, in the same direction as the foregoing end modification of the rubber component (A) in a wide sense.

In the method for producing a rubber composition according to the present invention, the thermoplastic resin (D) is used for the purpose of improving the wet property. The resin which can be used includes thermoplastic resins which have a molecular weight of several hundreds to several thousands and which provide natural rubbers and synthetic rubbers with an tackiness by blending thermoplastic resins, and various natural resins and synthetic resins can be used.

Also, the rubber composition can effectively be inhibited from being reduced in a wear resistance which is originally brought about by using the thermoplastic resin by kneading 3 to 14 parts by mass or more of the thermoplastic resin and a part or a whole of the thiourea compound (E) in the first kneading stage to make it possible to allow the wear resistance and the wet performance to be consistent.

To be specific, capable of being used are natural resins such as rosin base resins and terpene base resins, and resins such as petroleum base resins, phenol base resins, coal base resins, and xylene base resins, wherein the synthetic resins have a molecular weight of preferably 500 to 5000, more preferably 700 to 4000.

The rosin base resins include resins such as gum rosins, tall oil rosins, wood rosins, hydrogenated rosins, disproportionated rosins, polymerized rosins, and glycerin and pentaerythritol esters of modified rosins, and the terpene base resins include terpene resins such as α-pinene base resins, β-pinene base resins, and dipentene base resins, aromatic modified terpene resins, terpene phenol resins, hydrogenated terpene resins, and the like.

Among the above natural resins, polymerized rosins, terpene phenol resins and hydrogenated terpene resins are preferred from the viewpoints of a wear resistance and a gripping property of the rubber composition blended.

The petroleum base resins are obtained by polymerization of cracked oil fractions in the form of a mixture with a Friedel-Crafts catalyst, wherein the fractions contain unsaturated hydrocarbons such as olefins and diolefins which are by-produced together with petrochemical basic raw materials such as ethylene and propylene, for example, by thermal cracking of naphtha in the petrochemical industry.

The above petroleum base resins include petroleum base resins such as aliphatic petroleum resins obtained by polymerizing or copolymerizing a C₅ fraction obtained by thermal cracking of the naphtha, aromatic petroleum resins obtained by polymerizing or copolymerizing a C₉ fraction obtained by thermal cracking of the naphtha, copolymerized petroleum resins obtained by copolymerization of the C₅ fraction and the C₉ fraction each described above, alicyclic compound base petroleum resins such as hydrogenated resins and dicyclopentadiene base resins, and styrene base resins such as polymers of styrene and substituted styrene and copolymers of styrene and other monomers.

Usually contained in the C₅ fraction obtained by thermal cracking of the naphtha are olefinic hydrocarbons such as 1-pentene, 2-pentene, 2-methyl-1-butene, 2-methyl-2-butene, and 3-methyl-1-butene, and diolefinic hydrocarbons such as 2-methyl-1,3-butadiene, 1,2-pentadiene, 1,3-pentadiene, and 3-methyl-1,2-butadiene.

The aromatic petroleum resins obtained by polymerization or copolymerization of the C₉ fraction are resins obtained by polymerization of aromatic compounds having 9 carbon atoms comprising vinyltoluene and indene as main monomers, and the specific examples of the C₉ fraction obtained by thermal cracking of the naphtha include styrene homologues such as α-methylstyrene, β-methylstyrene, and γ-methylstyrene, and indene homologues such as indene and coumarone.

The trade names thereof include Petrosin manufactured by Mitsui Chemicals, Inc., Petlite manufactured by Mikuni Chemical Co., Ltd., Neopolymer manufactured by JXTG Nippon Oil & Energy Corporation, Petcoal and Petrotack manufactured by Tosoh Corporation, and the like.

Further, modified petroleum resins obtained by modifying the petroleum resins comprising the C₉ fraction described above are suitably used in the present invention as resins which make it possible to allow the gripping property and the plant workability to be compatible.

The modified petroleum resins include C₉ base petroleum resins obtained by modifying the petroleum resins comprising the C₉ fraction with unsaturated alicyclic compounds, C₉ base petroleum resins obtained by modifying the resins with compounds having hydroxyl groups, C₉ base petroleum resins obtained by modifying the resins with unsaturated carboxylic acid compounds, and the like.

The preferred unsaturated alicyclic compounds include cyclopentadiene, methylcyclopentadiene and the like, and dicyclopentadiene, cyclopentadiene/methylcyclopentadiene codimers, tricyclopentadiene and the like as Diels-Alder reaction products of alkylcyclopentadiene, and dicyclopentadiene is particularly preferred.

The dicyclopentadiene-modified C₉ base petroleum resins can be obtained by a method such as thermal polymerization under the presence of both dicyclopentadiene and the C₉ fraction.

The dicyclopentadiene-modified C₉ base petroleum resins include, for example, Neopolymer 130S manufactured by JXTG Nippon Oil & Energy Corporation.

The compounds having hydroxyl groups include alcohol compounds and phenol compounds.

The specific examples of the alcohol compounds include, for example, alcohol compounds having double bonds such as allyl alcohol, and 2-butene-1,4-diol.

Capable of being used as the phenol compounds are phenol, alkylphenols such as cresol, xylenol, p-t-butylphenol, p-octylphenol, and p-nonylphenol.

The above hydroxyl group-containing compounds may be used alone or in combination of two or more kinds thereof.

The hydroxyl group-containing Cg base petroleum resins can be produced as well by a method in which monomers such as alkyl acrylate esters or alkyl methacrylate esters are thermally polymerized with a petroleum fraction to introduce ester groups into the petroleum resins and in which the above ester groups are then reduced, a method in which double bonds are allowed to remain in the petroleum resins or introduced thereinto and in which the above double bonds are then hydrated, and the like.

The products obtained by the various methods described above can be used as the hydroxyl group-containing C₉ base petroleum resins in the present invention, and the phenol-modified petroleum resins are preferably used from the viewpoints of the performances and manufacturability. The phenol-modified petroleum resins are obtained by cationic polymerization of the Cg fraction under the presence of phenol, and the phenol-modified petroleum resins are readily modified and inexpensive.

The phenol-modified Cg base petroleum resins include, for example, Neopolymer E-130 manufactured by JXTG Nippon Oil & Energy Corporation.

Further, products obtained by modifying the C₉ base petroleum resins with ethylenic unsaturated carboxylic acid can be used as the C₉ base petroleum resins modified with the unsaturated carboxylic acid compounds.

The representative examples of the above ethylenic unsaturated carboxylic acid include compounds such as maleic acid, maleic anhydride, fumaric acid, itaconic acid, tetrahydrophthalic acid, tetrahydrophthalic anhydride, acrylic acid, methacrylic acid, and citraconic acid.

The unsaturated carboxylic acid-modified C₉ base petroleum resins can be obtained by thermal polymerization of the C₉ base petroleum resins with the ethylenic unsaturated carboxylic acid.

In the present invention, maleic acid-modified C₉ base petroleum resins are preferred.

The unsaturated carboxylic acid-modified C₉ base petroleum resins include, for example, Neopolymer 160 manufactured by JXTG Nippon Oil & Energy Corporation.

Also, the copolymer resins of the C₅ fraction and the C₉ fraction which are obtained by thermal cracking of the naphtha can suitably be used in the present invention.

In this regard, the C₉ fraction shall not specifically be restricted, and it is preferably a C₉ fraction obtained by thermal cracking of the naphtha.

To be specific, it includes products such as TS30, TS30-DL, TS35, TS35-DL and the like of a Structol series manufactured by Schill & Seilacher Inc.

The phenol base resins described above include alkylphenol formaldehyde base resins and the rosin-modified compounds thereof, alkylphenol acetylene base resins, modified alkylphenol resins, terpene phenol resins, and the like, and to be specific, phenol base resins include trade name Hitanol 1502 manufactured by Hitachi Chemical Co., Ltd. which is a novolac type alkylphenol resin, trade name Koresin manufactured by BASF AG which is a p-t-butylphenol acetylene resin, and the like.

Also, the coal base resins include resins such as coumarone indene resins, and the xylene base resins include resins such as xylene formaldehyde resins.

In addition to the above, polybutene can also be used as a resin having a tackifying property.

Among the above synthetic resins, the copolymer resins of the C₅ fraction and the C₉ fraction, the aromatic petroleum resins obtained by polymerization or copolymerization of the C₉ fraction, the phenol base resins, and the coumarone indene resins are preferred from the viewpoints of a wear resistance and a gripping property of the rubber composition blended.

The thermoplastic resin (D) has a softening point of preferably 200°C or lower, more preferably falling in a range of 80 to 150°C measured based on ASTM E28-58-T.

If the softening point is 200°C or lower, processability is good. Also, if the softening point is 80°C or higher, the wet performance is suitable.

From the above viewpoints, the softening point falls in a range of preferably 90 to 120°C.

The resins described above may be used alone or in a mixture of two or more kinds thereof.

The thermoplastic resin (D) is blended in an amount of 3 to 14 parts by mass, preferably 5 to 10 parts by mass based on 100 parts by mass of the rubber component.

The essential components (A) to (E) and the components which are not related to vulcanization cross-linking and which are required to be evenly dispersed are blended and kneaded in the first kneading stage. Also, the whole amounts of the essential components (A) to (E) described above do not necessarily have to be blended in the first kneading stage, and a part thereof may be blended in the subsequent second kneading stage.

A component which is not essential but may be blended in the first kneading stage includes carbon black as a reinforcing filler. The carbon black which can be used shall not specifically be restricted, and carbon blacks having various particle diameters and structures can be used. At least one suitably selected from commercially available products of various grades such as SAF, ISAF, HAF, FEF, and GPF can be used.

In addition to the above compounds, rubber chemicals which are usually used for rubber compositions, such as zinc oxide, process oil, and stearic acid may be blended in the first kneading stage. It is the largest object in the first kneading stage to pull out the effects of the silica (B) and the silane coupling agent (C), and therefore such components as likely to bring about side reactions with the above components are preferably prevented from being blended. In general, the components of nitrogen-containing basic compounds are likely to be reacted unfavorably with the silane coupling agent (C), and therefore those excluding the compounds introduced by end modification for the rubber component (A) may be blended and kneaded in a stage which is the second kneading stage or a middle stage between the first kneading stage and the second kneading stage and in which concern of exerting influences in the first kneading stage is no longer present.

Next, the rubber composition is completed to be produced by cross-linking in the second kneading stage. In the present invention, the cross-linking is carried out by sulfur using the vulcanizing agent (F). Various sulfurs such as powder sulfur, sulfur flowers, deoxygenated sulfur, soft sulfur, and polymer sulfur can be used for sulfur used as the vulcanizing agent (F). The sulfur can be blended in a range of 1 to 10 parts by mass, preferably 1 to 7 parts by mass and particularly preferably 2 to 5 parts by mass based on 100 parts by mass of the rubber component (A).

Also, a vulcanization accelerator for controlling the progressing of the vulcanization can be blended when the vulcanizing agent (F) is blended. Capable of being given as the vulcanization accelerator are thiazole base vulcanization accelerators such as M: 2-mercaptobenzothiazole, DM: dibenzothiazolyl disulfide, and CZ: N-cyclohexyl-2-benzothiazolylsulfenamide; thiuram base vulcanization accelerators such as TT: tetramethylthiuram sulfide and TOT: tetrakis(2-ethylhexyl)thiuram disulfide; and guanidine base vulcanization accelerators such as DPG: diphenylguanidine. Also, to begin with, the thiourea compounds (E) is used for enhancing the effects of the silane coupling agent (C) in the producing method of the present invention. However, thiourea has so far been known as a vulcanization accelerator, and a blend amount thereof may be increased or decreased taking an effect thereof into consideration including the above effects.

In addition to the above, compounds exerting effects by using originally in a stage related to vulcanization, such as vulcanization activators, and components which are nitrogen-containing basic compounds, among antioxidants are given as the component preferably blended in the subsequent second kneading stage. However, this shall not apply to components related to vulcanization as long as they are components which do not exert influence on components such as the silane coupling agent (C) and which do not have to be concerned about influence even if blended in the first kneading stage.

Kneading in the second kneading stage is carried out at a maximum temperature of the rubber composition of 60 to 140°C, preferably 80 to 120°C and particularly preferably 100 to 120°C. Cross-linking by vulcanization proceeds in the above kneading stage, and therefore it is carried out for a kneading time of 10 seconds to 20 minutes, preferably 10 seconds to 10 minutes and particularly preferably 20 seconds to 5 minutes.

In a step of molding in which a finished product is obtained after passing through the second kneading stage, the temperature may be further elevated to thereby complete the vulcanization cross-linking.

### EXAMPLES

Next, the present invention shall be explained with reference to examples and comparative examples, but the constitution of the present invention shall not be restricted by the following examples. Tires for tests were produced in the following examples and comparative examples according to compositions and protocols based on the upper parts of the respective paragraphs in Table 1. Further, in comparing the performances of the samples, the wet performance and the wear resistance were measured in the following manners. The results thereof are shown altogether in two lines of the respective paragraphs in Table 1.

### Production of tires for test:

Fifty parts by mass of SBR of high Tg and natural rubber partially substituting for SBR and 50 parts by mass of modified SBR and non-modified SBR which were set as shown in Table 1 were blended to make the total amount 100 parts by mass, whereby the rubber component (A) was obtained. The rubber component (A) obtained above was blended with 50 parts by mass of the silica (B), 4 parts by mass of the silane coupling agent (C), the thermoplastic resin (D) of a mass part number varied as shown in Table 1, 1 part by mass of the thiourea compound (E) in a case of setting a thiourea blend kneading stage to 1, and the other common components, and the blend substance thus obtained was kneaded at 165°C for 1.2 minute by means of a Banbury mixer to finish the first kneading stage. Subsequently, the blend substance obtained above was blended with 2 parts by mass of sulfur, 5 parts by mass of the vulcanization accelerator, 1 part by mass of the thiourea compound (E) in a case of setting a thiourea blend kneading stage to 2, and the other common components, and the blend substance thus obtained was kneaded at 100°C for 1 minute to finish the second kneading stage. Further, the rubber composition obtained by the producing method described above was used for a tread part to mold a tire of 195/65R15, and the tire molded was heated at 160°C for 15 minutes to complete vulcanization, whereby a tire for test was produced.

### Wet performance:

A brake test was carried out at 80 km/h on a wet road to measure a distance (m) in which the car run until the car stopped, and a reciprocal number of the distance was shown by an index, wherein the value of the tire produced in Comparative Example 1 was set to 100. It is shown the larger the numerical value is, the better the wet performance is. Wear resistance:
A practical car was allowed to run 10,000 km on a paved road, and then a depth of the remaining groove was measured to determine a running distance required for wearing the tread by 1 mm and show the distance by an index, wherein the value of the tire produced in Comparative Example 1 was set to 100. It is shown that the larger the numerical value is, the better the wear resistance is.

**Table 1**

| | Comparative Example | | | | | Example | | | |
|---|---|---|---|---|---|---|---|---|---|
| | 1 | 2 | 3 | 4 | 5 | 1 | 2 | 3 | 4 |
| Modified low-Tg SBR | 0 | 50 | 50 | 0 | 50 | 50 | 50 | 50 | 50 |
| Non-modified low-Tg SBR | 50 | 0 | 0 | 50 | 0 | 0 | 0 | 0 | 0 |
| High-Tg SBR | 50 | 50 | 50 | 50 | 50 | 50 | 50 | 50 | 50 |
| NR | 0 | 0 | 0 | 0 | 0 | 0 | 0 | 0 | 0 |
| Thermoplastic resin | 2 | 2 | 2 | 2 | 7 | 7 | 9 | 9 | 6 |
| Thiourea blend part in kneading step | 2 | 2 | 1 | 1 | 2 | 1 | 1 | 1 * | 1 |
| Wet performance | 100 | 100 | 109 | 106 | 106 | 115 | 123 | 122 | 119 |
| Wear resistance | 100 | 100 | 104 | 104 | 96 | 108 | 109 | 108 | 107 |

| | Example | | | | | | Comparative Example | | |
|---|---|---|---|---|---|---|---|---|---|
| | 5 | 6 | 7 | 8 | | 9 | 6 | 7 | 8 |
| Modified low-Tg SBR | 50 | 50 | 0 | 50 | | 50 | 0 | 50 | 50 |
| Non-modified low-Tg SBR | 0 | 0 | 50 | 0 | | 0 | 50 | 0 | 0 |
| High-Tg SBR | 30 | 10 | 50 | 50 | | 50 | 50 | 50 | 50 |
| NR | 20 | 40 | 0 | 0 | | 0 | 0 | 0 | 0 |
| Thermoplastic resin | 7 | 7 | 7 | 12 | | 4 | 7 | 15 | 5 |
| Thiourea blend part in kneading step | 1 | 1 | 1 | 1 | | 1 | 2 | 1 | 2 |
| Wet performance | 110 | 106 | 113 | 124 | | 112 | 106 | 125 | 106 |
| Wear resistance | 111 | 113 | 104 | 104 | | 107 | 96 | 102 | 98 |

| | | | | | | | | | |
|---|---|---|---|---|---|---|---|---|---|
| * Diethylthiourea is used for a thiourea compound. | | | | | | | | | |

Modified low-Tg SBR: manufactured by Nippon Zeon Co., Ltd., Nipol NS616, 50 parts by mass, hydroxyl group-containing polyorganosiloxane modified
Non-modified low-Tg SBR: manufactured by JSR Corporation, JSR 1500
NR: natural rubber RSS#3
High-Tg SBR: manufactured by Dow Chemical Company, SLR6430, 50 parts by mass
Silica: manufactured by Rhodia Inc., Zeosil Premium, 200MP, 60 parts by mass
Silane coupling agent: manufactured by Degussa AG, sulfur-containing silane coupling agent, Si69
Thiourea: 1 part by mass
Thermoplastic resin: manufactured by Nippon Zeon Co., Ltd., Quintone G100B, Aliphatic·Aromatic resin
Carbon black: 15 parts by mass
Sulfur: 2 parts by mass
Vulcanization accelerator: manufactured by Ouchi Shinko Industrial Co., Ltd., diphenylguanidine, NOCCELER D, 3 parts by mass
Antioxidant: manufactured by Flexsys Inc., 6PPD, Santoflex 6PPD, 2 parts by mass
Zinc oxide: 2 parts by mass
Stearic acid: 1 part by mass

Any effect is not exerted in the tire produced in Comparative Example 2 in which the low-Tg SBR is modified in comparison with the tire produced in Comparative Example 1 in which a blend amount of the thermoplastic resin (D) is smaller than a lower limit value and in which the thiourea compound (E) is not blended in the first kneading stage. When thiourea is blended in the first kneading stage, the numerical values of the wet performance and the wear resistance tend to be increased as is the case with Comparative Example 3. Even if the low-Tg SBR is not modified as is the case with Comparative Example 4, change is scarcely observed. Even if only an amount of the resin is increased as is the case with Comparative Example 5, the wear resistance tends to be decreased if thiourea is not blended in the first kneading stage. When an amount of the resin is increased to a prescribed level to carry out kneading under the presence of thiourea blended in the first kneading stage, the numerical values of the wet performance and the wear resistance are increased, and the effects are sufficiently exerted as is the case with Example 1. When an amount of the resin is increased or decreased within the prescribed ranges, the well balanced effects are exerted as is the case with in Examples 2 to 4. Example 3 is an example in which the composition is the same as in Example 2 and in which diethylthiourea is used as the thiourea compound (E), and the same effects as in Example 2 are observed to be exerted. Also, the effects are exerted by substituting the high-Tg SBR partially with the natural rubber as is the case with Examples 5 and 6. In a case in which the low-Tg SBR is not modified and in which thiourea is not blended in the first kneading stage as is the case with Comparative Example 6, the wear resistance is reduced even if an amount of the thermoplastic resin falls in the prescribed range. This does not cause a difference as compared with Comparative Example 5. In the above case, however, when thiourea is blended again in the first kneading stage, the numerical values of the wet performance and the wear resistance are increased to exert sufficiently the effects as is the case with Example 7.

In Comparative Example 7 in which the low-Tg SBR is modified and in which an amount of the thermoplastic resin is increased more than the prescribed range in carrying out the kneading under blending thiourea in the first kneading stage, the wet performance is increased, but the wear resistance is not observed to be improved. The wear resistance tends to be recovered again in Example 8 in which an amount of the thermoplastic resin falls in the prescribed range. When an amount of the thermoplastic resin is further reduced, a balance between the numerical values of the wet performance and the wear resistance is recovered as is the case with Example 9. In a case in which an amount of the thermoplastic resin is equal to or slightly larger than Example 9 and in which in which thiourea is not blended in the first kneading stage as is the case with Comparative Example 8, so that the wear resistance is decreased.

### INDUSTRIAL APPLICABILITY

A method for producing a rubber composition for a tire which is excellent in a braking property making it possible to run safely on wet roads and which has a good wear resistance is shown according to the present invention.

## Claims

1. A method for producing a rubber composition comprising:
100 parts by mass of a rubber component (A) containing 60% by mass or more of a styrene-butadiene copolymer rubber;
30 to 80 parts by mass of silica (B);
5 to 14 parts by mass of a silane coupling agent (C);
3 to 14 parts by mass of a thermoplastic resin (D);
at least one thiourea compound (E) selected from thiourea and diethylthiourea; and
a vulcanizing agent (F),
wherein the producing method includes a kneading step for kneading the rubber composition in plural stages, and
the kneading step includes:
a first kneading stage for kneading
100 parts by mass of the rubber component (A);
the silica (B);
2 parts by mass or more of the silane coupling agent (C);
3 to 14 parts by mass of the thermoplastic resin (D); and
a part or all of the thiourea compound (E), and
a second kneading stage for kneading the kneaded matter prepared by kneading in the first kneading stage and the vulcnaizing agent (F) after finishing the first kneading stage.

2. The method for producing a rubber composition as described in claim 1, wherein a part or all of the ends of the rubber component (A) containing 60% by mass or more of the styrene-butadiene copolymer rubber are modified.

3. The method for producing a rubber composition as described in claim 1 or 2, wherein the rubber component (A) containing 60% by mass or more of the styrene-butadiene copolymer rubber contains two kinds of the styrene-butadiene copolymer rubbers having different glass transition temperatures Tg and satisfies parts by mass of the styrene-butadiene copolymer rubber of low Tg/parts by mass of the styrene-butadiene copolymer rubber of high Tg≥1.

4. The method for producing a rubber composition as described in any one of claims 1 to 3, wherein the end of the styrene-butadiene copolymer rubber of low Tg out of two kinds of the styrene-butadiene copolymer rubbers contained in the rubber component (A) containing 60% by mass or more of the styrene-butadiene copolymer rubber is modified.
